# EUROPEAN PATENT APPLICATION

(11) **EP 4 763 940 A1**
(43) Date of publication of application: **24.06.2026**
(21) Application number: 24221635.6
(22) Date of filing: 19.12.2024
(51) Int. Cl.: C09J 133/12

(54) **ACRYLATE TACKIFIER FROM SOLVENT-FREE PROCESS**

(71) Applicant: TESA SE, 22848 Norderstedt (DE)
(72) Inventor: NGUYEN, Dr. Duc Hung, 22848 Norderstedt (DE); REN, Yanjie, 22848 Norderstedt (DE); ELLRINGMANN, Dr. Kai, 22848 Norderstedt (DE)
(74) Representative: tesa SE

(57) **Abstract**

A method for efficiently manufacturing low molecular weight poly(meth)acrylates that can be used as tackifier resins in pressure-sensitive adhesives should be provided. This is achieved with a Method for manufacturing a packaged poly(meth)acrylate having a weight-average molecular weight, determined by gel permeation chromatography as described herein, of 500 - 10,000 g/mol,
the method comprising the steps of
a) providing a composition comprising
- a monomer mixture for producing a poly(meth)acrylate;
- a polymerization initiator; and
- a molecular weight-controlling substance
contained in a packaging material; and

b) polymerizing the composition to give a packaged poly(meth)acrylate.

Further subject matters of the invention are a packaged poly(meth)acrylate obtained by a method according to the invention, a method for manufacturing a pressure-sensitive adhesive and a pressure-sensitive adhesive.

## Description

The invention relates to the technical field of low molecular weight poly(meth)acrylates and manufacturing methods for these. A wider context of the invention is the use of low molecular weight poly(meth)acrylates as additives in pressure-sensitive adhesive formulations wherein they can e. g. serve as tackifiers. More specifically, the invention relates to a method for manufacturing low molecular weight poly(meth)acrylates within a packaging material. The resulting packaged (meth)acrylate resins allow for improved transport, storing and processing.

Tackifiers are used in various fields of technology. In the field of adhesives, it has become common to add auxiliary materials to the adhesive matrix materials which improve the binding strength and/or further performance features of the products.

In the field of pressure-sensitive adhesives as commonly used in adhesive tapes, poly(meth)acrylates have proven to be high-performance basic materials. They exhibit excellent properties, e. g. resistance against light, weather and various chemicals; intrinsic adhesive force as well as temperature and aging resistance. Furthermore, they are advantageously usable with a variety of polar substrates like glass and steel but also with nonpolar substrates like polystyrene and polycarbonates. There is a general interest in further improving the adhesive performance of (meth)acrylate-based compositions in particular on less polar substrates in order to benefit from their numerous positive properties in such applications as well. In this context, the further development of appropriate tackifiers and of methods to produce them is of great interest.

Tackifiers based on low-molecular weight oligo- and poly(meth)acrylates have been described in the state of the art.

US 3,867,481 discloses improved molding compositions based on polyvinyl halides modified with acrylic polymers. The polymeric modifiers have molecular weights of from 1,500 to less than 10,000 and contain residues of (A) from 75 to 100 wt.-% alkyl methacrylate and (B) from 0 to 25 wt.-% of at least one additional ester of acrylic or methacrylic acid, styrene or substituted styrene. The molding compositions provide improved flow and processing characteristics.

EP 0 312 228 A1 describes a polymeric additive, polymerized from monomers selected from (C₁-C₂₀ alkyl and cycloalkyl)acrylate, (C₁-C₂₀ alkyl and cycloalkyl)methacrylate, free-radical polymerizable olefinic acids and optionally other ethylenically unsaturated monomers, having a number average molecular weight less than 35,000 and a softening point greater than 40 °C, which may be used in adhesive compositions for improving peel strength, shear resistance and/or tack.

JP 54-3136 A discloses an adhesive comprising an acrylic polymer and an oligomer having a molecular weight of 500 to 3,500 g/mol, the latter being referred to as tackifier and being copolymerized from one or more compounds selected from C₁-C₂₀ alkyl acrylates, C₄-C₁₂ alkyl methacrylates and vinyl aromates.

The subject matter of EP 1 491 604 A1 is a pressure-sensitive adhesive composition containing
a) an acrylic polymer having an alkyl (meth)acrylate whose alkyl group has from 4 to 12 carbon atoms as a monomer major component and a carboxyl group-containing monomer as a further monomer component, the acrylic polymer having a weight average molecular weight of from 500,000 to 900,000; and
b) an oligomer containing an ethylenically unsaturated monomer having a cyclic structure as a monomer major component and a carboxyl group-containing monomer as a further monomer component, the oligomer having a weight average molecular weight of from 3,000 to 6,000.

EP 2 385 089 A1 describes a single-layered acrylic pressure-sensitive adhesive tape having a pressure-sensitive adhesive layer formed from an acrylic pressure-sensitive adhesive composition. The acrylic pressure-sensitive adhesive composition contains an acrylic polymer (A) and a (meth)acrylic polymer (B) whose glass transition temperature is ≤ 45 °C and whose mass average molecular weight (Mw) is such that 1,500 ≤ Mw ≤ 4,000.

WO 2019/185377 A1 relates to adhesive resins, which can be used in a wide range of (meth)acrylate adhesive compounds and allow the development of a balanced profile of characteristics. This is achieved using an oligomer having a weight-average molecular weight of 1,500 to 5,000 g/mol and a polydispersity of ≤ 2, the constitution of which oligomer can be attributed to a monomer composition consisting of at least 50 wt.-% of a mixture of a) methyl methacrylate; b) cyclohexyl methacrylate; and optionally c) one or more radically polymerizable monomers; and at least one compound containing an -SH group.

Methods of performing polymerization processes with packaged materials have been reported as well.

WO 96/07522 A1 discloses a method for making a packaged, hot melt adhesive in which the packaging material is compatible with the adhesive. A liquid pre-adhesive composition is substantially surrounded with a packaging material, exposed to transmissive energy, and allowed to polymerize.

WO 00/06637 A1 describes polymer foam articles having a substantially smooth surface prepared by melt-mixing a polymer composition and a plurality of microspheres, at least one of which is an expandable polymeric microsphere, under process conditions, including temperature and shear rate, selected to form an expandable extrudable composition; and extruding the composition through a die. To manufacture the polymer composition, acrylic monomers and a radical initiator are placed into packages made of ethylene vinylacetate copolymer. The packages are immersed in a water bath and at the same time exposed to ultraviolet radiation to form a packaged pressure-sensitive adhesive.

There is an ongoing interest in efficient methods to manufacture poly(meth)acrylate-based tackifiers.

It was an object of the invention to provide a method for efficiently manufacturing low molecular weight poly(meth)acrylates that can be used as tackifier resins in pressure-sensitive adhesives. It was particularly desirable to find a method that is advantageous also in terms of ecology.

Thus, a further object of the invention was to provide a manufacturing method that allows for a solvent-free, one-step process.

It was an additional object of the invention to keep the energy consumption of the method as low as possible.

A further object of the invention was to provide low molecular weight poly(meth)acrylates which allow for straightforward processing.

The invention is based on the finding of the inventors that low molecular weight poly(meth)acrylate resins can be advantageously manufactured as a packaged material.

The objects stated above are therefore achieved by the subject matter of the invention, as defined in the claims. Preferred configurations according to the invention are evident from the dependent claims and from the observations that follow.

Embodiments referred to below as preferred are combined, in particularly preferred embodiments, with features of other embodiments referred to as preferred. Especially preferred, therefore, are combinations of two or more of the embodiments referred to below as particularly preferred. Likewise preferred are embodiments in which a feature of one embodiment that is referred to to any extent as being preferred is combined with one or more further features of other embodiments which are referred to to any extent as being preferred. Features of preferred poly(meth)acrylates and pressure-sensitive adhesives are apparent from the features of preferred methods.

Where, below, both specific amounts or fractions of an element and preferred configurations of the element are disclosed, the specific amounts or fractions of the elements with preferred configuration are also disclosed, in particular. Moreover, in the case of the corresponding specific total amounts or total fractions of the elements, it is disclosed that at least some of the elements may have preferred configuration and also, in particular, that elements of preferred configuration may be present again in the specific amounts or fractions within the specific total amounts or total fractions.

A first and general subject of the invention is a method for manufacturing a packaged poly(meth)acrylate having a weight-average molecular weight, determined by gel permeation chromatography as described herein, of 500 - 10,000 g/mol,
the method comprising the steps of
a) providing a composition comprising
   - a monomer mixture for producing a poly(meth)acrylate;
   - a polymerization initiator; and
   - a molecular weight-controlling substance
      contained in a packaging material; and
b) polymerizing the composition to give a packaged poly(meth)acrylate.

The method according to the invention enables a highly efficient synthesis of poly(meth)acrylates with low energy consumption and without any need to use solvents.

A "poly(meth)acrylate" is understood to mean a macromolecular compound obtainable by radical polymerization of acrylic and/or methacrylic monomers and optionally further copolymerizable monomers. More particularly, a "poly(meth)acrylate" is understood to mean a polymerized compound having a monomer basis consisting to an extent of at least 50 wt% of acrylic acid, methacrylic acid, acrylic esters and/or methacrylic esters, where acrylic esters and/or methacrylic esters are present at least in part, preferably to an extent of at least 30 wt%, based on the overall monomer basis of the oligomer or polymer, respectively, in question. As commonly known in the art, "(meth)" indicates that the respective compound can be both an acrylic compound and a methacrylic compound.

The "poly(meth)acrylates" resulting from the method according to the present invention may be alternatively referred to as "oligomers" or "polymers". Therefore, the prefix "poly" is not meant here to indicate any classification of the compounds as "polymers"; it is rather used in order to simplify the denomination of the compounds. It is assumed herein that there is no sharp differentiation between "oligomers" and "polymers". As commonly practiced in the art, a polymerized compound is referred to as "oligomer" as long as the addition of one monomeric unit still leads to a significant or at least observable change of the compound properties. If this is not the case anymore the compound is referred to as a "polymer". For the sake of clarity, the poly(meth)acrylates of the present invention are further characterized by their weight-average molecular weight, determined by gel permeation chromatography as well-known in the art and described herein in the experimental section.

The method according to the invention is generally not depending on the monomer mixture for producing the poly(meth)acrylate. Basically, all monomers known to the skilled person for forming a (meth)acrylic resin which may serve as an additive in a pressure-sensitive adhesive composition may be used. Considering the desired function of the (meth)acrylic resin, however, the monomer mixture of the method according to the invention preferably comprises to a total amount of at least 60 wt.-% one or more monomers the homopolymer of which have a glass transition temperature, determined by means of dynamic scanning calorimetry (DSC) as described herein, of at least 50 °C, more preferably of at least 70 °C. It has been found that this is advantageous in terms of shear strength of pressure-sensitive adhesives which contain the poly(meth)acrylates, e.g., as tackifiers.

It has been found that alkyl methacrylates particularly contribute to pressure-sensitive adhesives having a versatile characteristics profile. Therefore, the monomer mixture of the method according to the invention preferably comprises to a total amount of at least 50 wt.-%, more preferably of at least 60 wt.-%, particularly preferably of at least 70 wt.-%, one or more monomers selected form alkyl methacrylates.

In one embodiment, the monomer mixture for producing the poly(meth)acrylate being part of the composition provided in accordance with step a) of the method according to the invention comprises one or more monomers selected from the group consisting of acrylic acid, 2-hydroxyethyl methacrylate, isobornyl acrylate, isobornyl methacrylate, benzyl methacrylate, cyclohexyl methacrylate, ethyl methacrylate, iso-butyl methacrylate, methyl methacrylate, phenoxyethyl methacrylate, tert-butyl cyclohexyl methacrylate, tert-butyl methacrylate, ureido methacrylate, α-methyl styrene, styrene and N,N-dimethyl acrylamide. Preferably, the monomer mixture for producing the poly(meth)acrylate being part of the composition provided in accordance with step a) of the method according to the invention comprises one or more of these monomers in a total amount of at least 70 wt.-%, more preferably of at least 80 wt.-%, particularly preferably of at least 90 wt.-%.

Particular preference in this respect is given to methyl methacrylate, isobornyl methacrylate and cyclohexyl methacrylate. Preferably, the monomer mixture for producing the poly(meth)acrylate being part of the composition provided in accordance with step a) of the method according to the invention comprises to a total amount of at least 60 wt.-%, more preferably of at least 70 wt.-%, particularly preferably of at least 80 wt.-%, a mixture of methyl methacrylate forming a first component and cyclohexyl methacrylate and/or isobornyl methacrylate forming a second component. Preferably, only one of cyclohexyl methacrylate and isobornyl methacrylate is present in the second component. Within the monomer mixture, the weight ratio of methyl methacrylate to the total amount of cyclohexyl methacrylate and/or isobornyl methacrylate, i.e. the weight ratio of the first component to the second component, preferably is from 2:1 to 1:2, more preferably from 3:2 to 2:3.

The packaged poly(meth)acrylate resulting from the method according to the invention has a weight-average molecular weight, determined by gel permeation chromatography as described herein, of 500 - 10,000 g/mol. Preferably, the poly(meth)acrylate has a weight-average molecular weight, determined by gel permeation chromatography as described herein, of 1,500 - 5,000 g/mol, more preferably of 2,000 - 4,500 g/mol, particularly preferably of 2,500 - 4,000 g/mol.

Furthermore, the polydispersity D of the packaged poly(meth)acrylate resulting from the method according to the invention preferably is ≤ 3, more preferably ≤ 2. As generally known in the art, the polydispersity D is defined as the ratio between weight-average molecular weight and number-average molecular weight: D = M_{w}/Mₙ.

The composition of step a) of the method according to the invention comprises a polymerization initiator. Generally, all polymerization initiators known to the skilled person may be used in the method according to the invention. Preferably, the polymerization initiator is a UV-activatable polymerization initiator.

In an embodiment, the polymerization initiator is selected from the group consisting of α-hydroxy ketones, phenyl glycoxylates, benzyl dimethyl ketals, α-amino ketones, mono-acyl phosphines, bis-acyl phosphines, metallocenes, iodonium salts and mixtures of two or more of the aforementioned compounds; more preferably from the group consisting of α-hydroxy ketones.

Preferably, the composition of step a) of the method according to the invention comprises one or more polymerization initiators to a total amount of 0.1 -1.5 wt.-%, more preferably to a total amount of 0.2 - 1.2 wt.-%, particularly preferably to a total amount of 0.25 - 1.1 wt.-%, based on the total weight of the composition of step a).

The composition of step a) of the method according to the invention comprises a molecular weight-controlling substance. Generally, any molecular weight-controlling substance known in the art may be used in the method according to the invention.

In one embodiment, the molecular weight-controlling substance is selected from the group consisting of thiols, halogen compounds and alcohols, preferably from the group consisting of thiols, in particular alkane thiols.

In a further embodiment, the molecular weight-controlling substance is selected from the group consisting of 2-mercapto propionic acid, cyclohexyl mercaptane, S,S-dibenzyl trithiocarbonate, dodecane thiol, 2-ethylhexyl thioglycolate and 2-mercapto ethanol. These substances are advantageous because they no longer cause any odor nuisance after polymerization.

Most preferably, the molecular weight-containing substance is selected from the group consisting of C₈-C₁₈-alkane thiols; for example, the molecular weight-controlling substance is dodecane thiol.

Generally, the composition of step a) of the method according to the invention may comprise one or more molecular weight-controlling substances. Preferably, the composition of step a) of the method according to the invention comprises one or more molecular weight-controlling substances, preferably as listed hereinbefore, in a total amount of 1 to 20 wt.-%, more preferably of 3 to 15 wt.-%, particularly preferably of 5 to 12 wt.-%, e.g., 5 to 10 wt.-%, each based on the total weight of the composition of step a) of the method according to the invention.

In a preferred embodiment, the composition of step a) of the method according to the invention comprises one or more polymerization initiators in a total amount of 0.1 - 1.5 wt.-%, and one or more molecular weight-controlling substances in a total amount of 1 to 20 wt.-%, each based on the total weight of the composition of step a) of the method according to the invention. More preferably, the composition of step a) comprises one or more polymerization initiators in a total amount of 0.2 - 1.2 wt.-%, and one or more molecular weight-controlling substances in a total amount of 3 to 15 wt.-%, each based on the total weight of the composition of step a) of the method according to the invention. Particularly preferably, the composition of step a) comprises one or more polymerization initiators in a total amount of 0.25 - 1.1 wt.-%, and one or more molecular weight-controlling substances in a total amount of 5 to 12 wt.-%, each based on the total weight of the composition of step a) of the method according to the invention.

According to the invention, the composition of step a) is contained in a packaging material. A "packaging material" is understood to be any system that does not conflict with the polymerization process and completely surrounds the composition to be polymerized, thereby spatially limiting the composition, and that furthermore at least limits, preferably avoids, at least the passage of air, water and the enclosed monomers. Preferably, the packaging material consists of a polymer film; more preferably, the material of the polymer film is selected from the group consisting of ethylene-vinyl acetate copolymers, ethylene-acrylic acid copolymers, polyethylene, polypropylene, polybutadiene, ionomer foils and mixtures thereof; most preferably, it is selected from the group consisting of polyethylene, ethylene-vinyl acetate copolymers and mixtures thereof. The thickness of the packaging material preferably is 20 to 100 µm, more preferably 35 to 70 µm, particularly preferably 40 to 60 µm. The thickness of a packaging material filled with the composition according to step a) of the method according to the invention preferably is 2 to 22 mm, more preferably 5 to 21 mm, particularly preferably 7 to 20 mm. The packaging material can be produced, e. g., by putting two foils on top of each other, hot-sealing the longitudinal sides and the lower lateral edge, filling in the composition according to step a) and sealing in sections through the liquid, thus resulting in a plurality of filled packaging materials which will be separated from each other afterwards.

Preferably, the polymerization carried out according to step b) of the method according to the invention is activated by thermal or energy ray induced formation of radicals. More preferably, the polymerization according to step b) of the method according to the invention is activated by energy ray induced formation of radicals, particularly preferably by UV irradiation induced formation of radicals.

In an embodiment, the polymerization of step b) is brought about by UV irradiation of 20 to 100 mW/cm² over at least 10 min in order to get a monomer conversion above 99 %. Preferably, the packaging material containing the composition of step a) to be polymerized is stored in a water bath at least during a part of the UV irradiation. "Stored in a water bath" means that the packaging material is surrounded by water; preferably, it is entirely surrounded by water.

In an enhanced embodiment, the packaging material containing the composition of step a) to be polymerized
- during a first phase of UV irradiation is stored in a water bath and
- during a second phase of UV irradiation is exposed to air.

Particularly preferably, therein, the first phase of UV irradiation is longer than the second phase of UV irradiation.

Polymerizations with the parameters described above advantageously result in residual monomer contents of less than 0.8% by weight (determined gravimetrically, 3 hours at 120°C).

A further subject matter of the invention is a packaged poly(meth)acrylate having a weight-average molecular weight, determined by gel permeation chromatography as described herein, of 500 - 10,000 g/mol, that is obtained by a method according to the invention. A packaged poly(meth)acrylate of the invention exhibits a significantly lowered VOC (volatile organic compounds) value compared to similar poly(meth)acrylates as provided by usual solvent-based polymerization procedures. Furthermore, a packaged poly(meth)acrylate of the invention is ready to be shipped to the place of its further processing directly after being polymerized; there is no need for an additional packaging step.

Packaged poly(meth)acrylates of the invention may be used as a component in the manufacturing of adhesives, in particular of pressure-sensitive adhesives. A further subject matter of the invention is a method for manufacturing a pressure-sensitive adhesive, the method comprising the steps of
(1) providing a pressure-sensitive adhesive precursor composition;
(2) providing a packaged poly(meth)acrylate according to the invention;
(3) shredding the packaged poly(meth)acrylate, thereby destroying the packaging and providing a shredded poly(meth)acrylate;
(4) mixing the pressure-sensitive adhesive precursor composition and the shredded poly(meth)acrylate in a mixing apparatus; and
(5) removing the mixture resulting from step (4) from the mixing apparatus.

The pressure-sensitive adhesive precursor composition comprises one or more base polymers or monomers which after polymerization will form the one or more base polymers. In the simplest case, the pressure-sensitive adhesive precursor composition consists of one or more polymers and/or monomers. However, the pressure-sensitive adhesive precursor composition may comprise further additives of the pressure-sensitive adhesive to be manufactured already, e. g. fillers, stabilizers, crosslinkers, pigments, plasticizers etc. Alternatively, one or more of the additives may be added during the manufacturing process.

In one embodiment of the method for manufacturing a pressure-sensitive adhesive according to the invention, the pressure-sensitive adhesive precursor composition is a hot-melt processable pressure-sensitive adhesive precursor composition comprising at least one base polymer of the pressure-sensitive adhesive to be manufactured, and the mixing apparatus is a hot-melt mixing apparatus, more preferably an extruder. Preferably, the at least one base polymer is a poly(meth)acrylate, wherein it is self-evident that the poly(meth)acrylate base polymer is not the same as the packaged or shredded poly(meth)acrylate, respectively.

Preferably, the packaging material is molten and mixed with the pressure-sensitive adhesive precursor composition and the shredded poly(meth)acrylate in the mixing apparatus; this may be advantageous because there is no need to remove the packaging material. The method for manufacturing a pressure-sensitive adhesive according to the present embodiment may be defined as comprising the steps of
(1) providing a hot-melt processable pressure-sensitive adhesive precursor composition;
(2) providing a packaged poly(meth)acrylate according to the invention;
(3) shredding the packaged poly(meth)acrylate, thereby destroying the packaging;
(4) melt-mixing the pressure-sensitive adhesive precursor composition, the shredded poly(meth)acrylate and the packaging material in a hot-melt mixing apparatus, thereby forming a hot-melt blend; and
(5) removing the hot-melt blend from the hot-melt mixing apparatus.

In this embodiment, the shredding step (3) may largely take place simultaneously with the melt-mixing step (4), with the shredding then occurring on the already softened packaging material. A mechanical crushing of the packaged poly(meth)acrylates does not necessarily have to take place before the melt-mixing.

In a further embodiment of the method for manufacturing a pressure-sensitive adhesive according to the invention, the pressure-sensitive adhesive precursor composition comprises monomers to be polymerized to give one or more polymers of the pressure-sensitive adhesive composition to be manufactured, wherein the monomers are present in the pressure-sensitive adhesive precursor composition in a total share of at least 50 wt.-%, preferably of at least 70 wt.-%, more preferably of at least 80 wt.-%.

Preferably, the packaging material is blown away after shredding the packaged poly(meth)acrylate to separate it from the shredded poly(meth)acrylate.

The method for manufacturing a pressure-sensitive adhesive according to the present embodiment may be defined as comprising the steps of
(1) providing a pressure-sensitive adhesive precursor composition comprising monomers of one or more polymers of the pressure-sensitive adhesive; wherein the monomers are present in the pressure-sensitive adhesive precursor composition in a total share of at least 50 wt.-%, preferably of at least 70 wt.-%, more preferably of at least 80 wt.-%, particularly preferably of at least 85 wt.-%;
(2) providing a packaged poly(meth)acrylate according to the invention;
(3) shredding the packaged poly(meth)acrylate, thereby destroying the packaging;
(4) separating the packaging material from the poly(meth)acrylate;
(5) mixing the pressure-sensitive adhesive precursor composition with the shredded poly(meth)acrylate; and
(6) polymerizing the pressure-sensitive adhesive precursor composition in the presence of the poly(meth)acrylate.

Preferably, at least 60 wt.-%, more preferably, at least 80 wt.-% of the entirety of the monomers of the pressure-sensitive adhesive precursor composition are (meth)acrylate monomers.

Further, preferably, the pressure-sensitive adhesive precursor composition is a syrup comprising the monomers as described and polymerized material, wherein the pressure-sensitive adhesive precursor composition comprises polymerized material in a total amount of maximum 20 wt.-%, more preferably of maximum 15 wt.-%. However, the packaged poly(meth)acrylate may be added to that syrup or to the precursor composition not yet containing any polymerized material.

After the mixing step (5), the resulting mixture preferably is coated onto a carrier material which may be a temporary or permanent carrier material, e.g., a carrier of an adhesive tape or a release liner. The polymerization step (6) is preferably carried out when the mixture resulting from step (5) has been coated onto the carrier material. Apparently, the mixture needs to exhibit a viscosity that is sufficient for keeping its shape when it is coated onto the carrier material.

In a further embodiment of the method for manufacturing a pressure-sensitive adhesive according to the invention, the pressure-sensitive adhesive precursor composition is a solution of at least one base polymer of the pressure-sensitive adhesive composition to be manufactured in a solvent. Preferably, the pressure-sensitive adhesive precursor composition is a solution of all polymers of the pressure-sensitive adhesive composition to be manufactured in a solvent.

In this embodiment, the shredded poly(meth)acrylate may be dissolved in the solvent and the packaging material particles resulting from the shredding may be filtered out of the solution, thereby separating them from the poly(meth)acrylate. Preferably, the at least one base polymer is a poly(meth)acrylate, wherein it is self-evident that the poly(meth)acrylate base polymer is not the same as the packaged or shredded poly(meth)acrylate, respectively.

The method for manufacturing a pressure-sensitive adhesive according to the present embodiment may be defined as comprising the steps of
(1) providing a pressure-sensitive adhesive precursor composition comprising a solution of at least one polymer of the pressure-sensitive adhesive composition to be manufactured in a solvent;
(2) providing a packaged poly(meth)acrylate according to the invention;
(3) shredding the packaged poly(meth)acrylate, thereby destroying the packaging;
(4) dissolving the shredded poly(meth)acrylate in the solution of the at least one polymer of the pressure-sensitive adhesive composition to be manufactured;
(5) separating the shredded packaging material from the solution resulting from step (4).

Preferably, separating the shredded packaging material from the solution resulting from step (4) is achieved by filtering out he shredded packaging material of the solution resulting from step (4).

Further preferably, the method comprises a step
(6) removing solvent at least partly from the solution resulting from step (5).

A further subject matter of the invention is a pressure-sensitive adhesive that is obtained by a method for manufacturing a pressure-sensitive adhesive according to the invention.

A further subject matter of the invention is a method for manufacturing pellets of a poly(meth)acrylate according to the invention, the method comprising the following steps:
a) providing a packaged poly(meth)acrylate according to the invention;
b) separating the packaging material from the poly(meth)acrylate;
c) melting the poly(meth)acrylate; and
d) shaping the melted poly(meth)acrylate into pellets.

The shaping step d) may be carried out by extruding the poly(meth)acrylate into strands, cooling the strands, for example in water, and separating the strands into pellets, for example by cutting.

With this method, poly(meth)acrylates according to the invention can be produced in a dosage form that allows their direct use as an adhesive resin in, for example, poly(meth)acrylate-based pressure-sensitive adhesives.

### Experimental section

### Measurement and test methods

### Method 1 - molecular weight

The weight-average molecular mass Mw or weight-average molecular weight Mw, respectively, is determined by gel permeation chromatography (GPC). The eluent used is THF containing 0.1 vol.-% of trifluoro acetic acid. The measurement is made at 23°C. The pre-column used is PSS-SDV, 10 µ, 10³ Å, ID 8.0 mm x 50 mm. For separation, the columns used are PSS-SDV, 5 µ, 10³ Å as well as 10⁵ Å and 10⁷ Å each with ID 8.0 mm x 300 mm. The sample concentration is 0.5 g/l, the flow rate 0.5 ml/min. Calibration is carried out using the commercially available ReadyCal kit Poly(styrene) high from PSS Polymer Standard Service GmbH, Mainz and is transferred into poly methyl methacrylate (PMMA) using Mark Houwink parameters K and α; the results are thus specified in PMMA mass equivalents.

The method is also applicable in determining number-average molecular weights.

### Method 2 - glass transition temperature

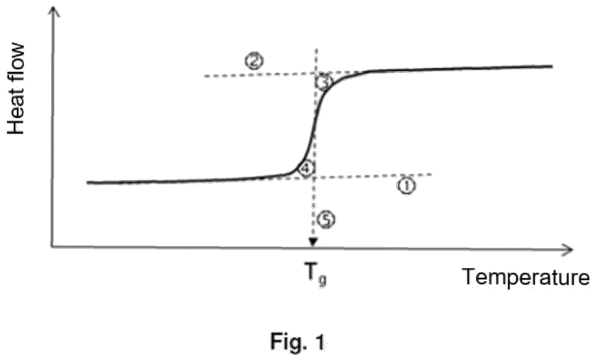

The glass transition temperature is determined by means of dynamic scanning calorimetry (DSC). For this test, about 5 mg of the untreated samples are weighed out into an aluminium crucible (volume 25 µl) and closed with a perforated lid. For the measurement, a DSC 204 F1 from Netzsch is used and is operated under nitrogen for inertization. The sample is first cooled to -150 °C, heated to +150 °C at a heating rate of 10 K/min, and cooled again to -150 °C. The subsequent second heating curve is run again at 10 K/min, and the change in the heat capacity is recorded. Glass transitions are recognized as steps in the thermogram (heat flow vs. temperature). The glass transition temperature is evaluated as follows (in this regard, see Figure 1). A tangent is applied in each case to the baseline of the thermogram before 1 and after 2 of the step. In the region of the step, a line 3 of best fit is placed parallel to the ordinate in such a way that the two tangents intersect, specifically such as to form two areas 4 and 5 (between the respective tangent, the line of best fit, and the measurement plot) of equal content. The point of intersection of the lines of best fit positioned accordingly and the measurement plot gives the glass transition temperature.

### Method 3 - peel adhesion

The determination of the peel adhesion (according to AFERA 5001) is conducted as follows. The defined adhesion substrates used are a polished steel plate (ASTM) and a PE plate, each of 2 mm thickness. The bondable sheetlike element under investigation (100 µm pressure-sensitive adhesive layer on 36 µm etched PET film) is trimmed to a width of 20 mm and a length of about 25 cm, is provided with a handling section, and immediately thereafter is pressed down five times onto the respective adhesion substrate chosen, using a 4 kg steel roller and an advance rate of 10 m/min. Immediately after that, the bondable sheetlike element is pulled away from the adhesion substrate at an angle of 180° with a tensile tester (from Zwick) at a velocity v = 300 mm/min, and the force required for this at room temperature is measured. The measured value (in N/cm) is obtained as a mean value from three individual measurements.

### Method 4 - conversion rate

The polymerization conversion rate was determined via weight loss on storage at 120 °C over 3 h.

### Manufacture of packaged poly(meth)acrylates

A piece of transparent heat sealable polyethylene vinyl acetate) film having a thickness of 70 µm was provided, folded and sealed by heat to form a bag with one open edge. The reactant mixtures as given in the tables was filled in, air was excluded by heat-sealing through the reactant mixtures to form a closed bag. The bag was 15 x 8 cm with different thickness, which was controlled by the amount of the reactant mixtures.

The film bags filled with the monomers were exposed to UV radiation at 365nm wavelength from both sides while being stored in a water bath or at ambient air; specific conditions as well as radiation intensity and time are given in the tables below.

Compositions of the poly(meth)acrylates, polymerization conditions and results are described in more detail in the examples and tables below.

Materials used in examples:
- Methyl methacrylate (CAS-Nr.: 80-62-6, supplier Merck)
- Cyclohexyl methacrylate (CAS-Nr.: 101-43-9, supplier Merck)
- Isobornyl methacrylate (CAS-Nr.: 5888-33-5, supplier Merck)
- Dodecane thiol (CAS-Nr.: 112-55-0, supplier Merck)
- Irgacure 184 (CAS-Nr.: 947-19-3, supplier IGM Resin)
- DURO-TAK^{®} 87-2852 (acrylates copolymer, supplier Henkel)
- Catana^{®} CAA 2072 (CAS-Nr.: 13963-57-0, supplier Sachem)

### Examples 1-8

The materials used were 45 wt.-% methyl methacrylate, 45 wt.-% cyclohexyl methacrylate, 10 % dodecane thiol; photoinitiator used was Irgacure^{®} 184 at 1 wt.-%, based on the total weight of the reaction mixture. Polymerization was carried out in a water bath at 20 °C. Results are given by table 1.

**Table 1 - manufacture of poly(meth)acrylate resins, examples 1-8**

| No. | Bag Thickness (mm) | Total UV Irradiation (both sides, mW/cm²) | UV Irradiation Time (min) | State of resulting material at 23 °C | Conversion rate (%) | M_{w} (g/mol) (PD) |
|---|---|---|---|---|---|---|
| 1 | 8 | 120 | 20 | Liquid | 74 | 3410 (1.9) |
| 2 | 10 | 120 | 20 | Liquid | 85 | 3440 (1.9) |
| 3 | 12 | 120 | 20 | Solid | 94 | 3500 (1.9) |
| 4 | 14 | 120 | 20 | Solid | 99.4 | 3380 (1.9) |
| 5 | 16 | 120 | 20 | Solid | 99.4 | 3380 (1.9) |
| 6 | 20 | 120 | 20 | Solid | 99.8 | 3370 (1.9) |
| 7 | 8 | 60 | 20 | Liquid | 85 | 3440 (2.0) |
| 8 | 8 | 90 | 15 | Liquid | 73 | 3450 (1.9) |

### Examples 9-11

The materials used were 48 wt.-% isobornyl methacrylate, 45 wt.-% methyl methacrylate, 7 wt.-% dodecane thiol; photoinitiator used was Irgacure^{®} 184 at 1 wt.-%, based on the total weight of the reaction mixture. Polymerization was carried out in a water bath at 20 °C. Results are given by table 2.

**Table 2 - manufacture of poly(meth)acrylate resins, examples 9-11**

| No. | Bag Thickness (mm) | Total UV Irradiation (both sides, mW/cm²) | UV Irradiation Time (min) | State of resulting material at 23 °C | Conversion rate (%) | M_{w} (g/mol) (PD) |
|---|---|---|---|---|---|---|
| 9 | 20 | 120 | 20 | Solid | 99.8 | 4480 (1.9) |
| 10 | 20 | 120 | 20 | Solid | 99.8 | 4470 (1.9) |
| 11 | 20 | 120 | 20 | Solid | 99.5 | 4490 (1.9) |

### Examples 12-13

The materials used were 48 wt.-% isobornyl methacrylate, 45 wt.-% methyl methacrylate, 7 wt.-% dodecane thiol; photoinitiator used was Irgacure^{®} 184 at 1 wt.-%, based on the total weight of the reaction mixture. Polymerization was carried out in ambient air at room temperature. Results are given by table 3.

**Table 3 - manufacture of poly(meth)acrylate resins, examples 12-13**

| No | Photoinitiator Irgacure^{®} 184 (wt.-%) | Bag Thickness (mm) | Total UV Irradiation (both sides, mW/cm²) | UV Irradiation Time (min) | State of resulting material at 23 °C | Conversion rate (%) | M_{w} (g/mol) (PD) |
|---|---|---|---|---|---|---|---|
| 12 | 1 | 8 | 40 | 5 | solid | 95.3 | 4510 (1.9) |
| | | | 12 | 5 | | | |
| | | | off (T > 80 °C) | 3 | | | |
| | | | 12 | 3 | | | |
| | | | off (T > 80 °C) | 3 | | | |
| | | | 12 | 3 | | | |
| 13 | 1 | 8 | 40 | 6 | solid | 99.8 | 4600 (1.9) |
| | | | 3.6 | 12 | | | |
| | | | off (T > 80 °C) | 5 | | | |
| | | | 3,6 | 22 | | | |

### Examples 14-16

The materials used were 48 wt.-% isobornyl methacrylate, 45 wt.-% methyl methacrylate, 7 wt.-% dodecane thiol; photoinitiator used was Irgacure^{®} 184 at 0.8 wt.-%, based on the total weight of the reaction mixture. Polymerization was carried out in a water bath at a temperature as indicated in table 4. Results are given by table 4.

**Table 4 - manufacture of poly(meth)acrylate resins, examples 14-16**

| No. | T water bath (°C) | Bag Thickness (mm) | Total UV Irradiation (both sides, mW/cm²) | UV Irradiation Time (min) | State of resulting material at 23 °C | Conversion rate (%) | M_{w} (g/mol) (PD) |
|---|---|---|---|---|---|---|---|
| 14 | 33 | 8 | 40 | 20 | solid | 99.7 | 4590 (1.9) |
| 15 | 44 | 8 | 40 | 14 | solid | 99.7 | 4550 (1.9) |
| 16 | 55 | 8 | 40 | 10 | solid | 98.7 | 4590 (1.8) |

### Examples 17-21

The materials used were 48 wt.-% isobornyl methacrylate, 45 wt.-% methyl methacrylate, 7 wt.-% dodecane thiol; photoinitiator used was Irgacure^{®} 184 at 1 wt.-%, based on the total weight of the reaction mixture. Polymerization was carried out in a water bath at 33 °C which was followed by further polymerization in ambient air at room temperature in examples 18, 20 and 21. Results are given by table 5.

**Table 5 - manufacture of poly(meth)acrylate resins, examples 17-21**

| No. | Bag Thickness (mm) | Total UV Irradiation (both sides, mW/cm²) | UV Irradiation Time (water bath, min)) | UV Irradiation Time /ambient air, min) | State of resulting material at 23 °C | Conversion rate (%) | M_{w} (g/mol) (PD) |
|---|---|---|---|---|---|---|---|
| 17 | 8 | 40 | 20 | | solid | 99.7 | 4590 (1.9) |
| 18 | 8 | 40 | 14 | 6 | solid | 99.6 | 4560 (1.9) |
| 19 | 8 | 40 | 13 | | viscous | 91.4 | 4580 (1.9) |
| 20 | 8 | 40 | 13 | 6 | solid | 99.8 | 4570 (1.9) |
| 21 | 8 | 40 | 12 | 6 | solid | 99.7 | 4550 (1.9) |

### Manufacture of pressure-sensitive adhesives

### Examples 22-24

In these examples, a pressure-sensitive adhesive was manufactured. The packaged polymethacrylate resin of example 6 was shredded. The package film was removed from the polymethacrylate resin. The polymethacrylate resin was dissolved in ethyl acetate mixed with an acrylic polymer (DURO-TAK^{®} 87-2852) to give a solvent mixture with a solid content of 33 %. Catana^{®} CAA 2072 was added as a crosslinker at 0.3 wt.-%, based on the total weight of the acrylic-polymer-resin mixture. The resulting pressure-sensitive adhesive was coated onto a 36 µm etched PET film. After dryring the 100 µm PSA coating was used to determine its peel adhesion. The results are given in table 6.

**Table 6 - peel adhesion**

| No. | wt.-% resin, based on total weight of the acrylic polymer | Peel adhesion (ASTM, N/cm) | Peel adhesion (PE, N/cm) |
|---|---|---|---|
| 22 | 0 | 3.5 | 1.8 |
| 23 | 10 | 4.2 | 2.2 |
| 24 | 30 | 7.8 | 3.0 |

## Claims

1. Method for manufacturing a packaged poly(meth)acrylate having a weight-average molecular weight, determined by gel permeation chromatography as described herein, of 500 - 10,000 g/mol,
the method comprising the steps of
a) providing a composition comprising
- a monomer mixture for producing a poly(meth)acrylate;
- a polymerization initiator; and
- a molecular weight-controlling substance
contained in a packaging material; and
b) polymerizing the composition to give a packaged poly(meth)acrylate.

2. Method according to claim 1, **characterized in that** the monomer mixture comprises to a total amount of at least 60 wt.-% one or more monomers the homopolymer of which have a glass transition temperature, determined by means of dynamic scanning calorimetry (DSC) as described herein, of at least 50 °C.

3. Method according to any of claims 1 and 2, **characterized in that** the monomer mixture of step a) comprises one or more monomers selected from the group consisting of acrylic acid, 2-hydroxyethyl methacrylate, isobornyl acrylate, isobornyl methacrylate, benzyl methacrylate, cyclohexyl methacrylate, ethyl methacrylate, iso-butyl methacrylate, methyl methacrylate, phenoxyethyl methacrylate, tert-butyl cyclohexyl methacrylate, tert-butyl methacrylate, ureido methacrylate, α-methyl styrene, styrene, and N,N-Dimethylacrylamid.

4. Method according to any of claims 1 and 2, **characterized in that** the monomer mixture of step a) comprises to a total amount of at least 60 wt.-% a mixture of methyl methacrylate forming a first component and cyclohexyl methacrylate and/or isobornyl methacrylate forming a second component.

5. Method according to any of the preceding claims, **characterized in that** the polymerization initiator is a UV-activatable polymerization initiator.

6. Method according to any of the preceding claims, **characterized in that** the molecular weight-controlling substance is selected from the group consisting of thiols, halogen compounds and alcohols.

7. Method according to any of the preceding claims, **characterized in that** the packaging material consists of a polymer film.

8. Method according to any of the preceding claims, **characterized in that** the thickness of the packaging material is 20 to 100 µm.

9. Method according to any of the preceding claims, **characterized in that** the polymerization of step b) is brought about by UV irradiation of 20 to 100 mW/cm² over at least 10 min.

10. Packaged poly(meth)acrylate having a weight-average molecular weight, determined by gel permeation chromatography as described herein, of 500 - 10,000 g/mol, the packaged poly(meth)acrylate being obtained by a method according to any of the preceding claims.

11. Method for manufacturing a pressure-sensitive adhesive, the method comprising the steps of
(1) providing a pressure-sensitive adhesive precursor composition;
(2) providing a packaged poly(meth)acrylate according to claim 10;
(3) shredding the packaged poly(meth)acrylate, thereby destroying the packaging and providing a shredded poly(meth)acrylate;
(4) mixing the pressure-sensitive adhesive precursor composition and the shredded poly(meth)acrylate in a mixing apparatus; and
(5) removing the mixture resulting from step (4) from the mixing apparatus.

12. Pressure-sensitive adhesive, obtained by a method according to claim 11.
